Europäisches Patentamt

European Patent Office

Office européen des brevets

(19)

(11) Numéro de publication: **0 230 978**

A1

(12) **DEMANDE DE BREVET EUROPEEN**

(21) Numéro de dépôt: **87100785.2**

(22) Date de dépôt: **21.01.87**

(51) Int. Cl.³: **B 65 B 55/14**
**A 23 L 3/10, A 23 L 1/16**
**B 65 B 31/00**

(30) Priorité: **28.01.86 CH 317/86**

(43) Date de publication de la demande:
**05.08.87 Bulletin 87/32**

(84) Etats contractants désignés:
**BE DE ES FR GB IT LU NL**

(71) Demandeur: **Aubert, Christophe**
**14, Chateau-Banquet**
**CH-1202 Genève(CH)**

(71) Demandeur: **Carugati, Daniel**
**9, rue Ernest-Hentsch**
**CH-1207 Genève(CH)**

(72) Inventeur: **Aubert, Christophe**
**14, Chateau-Banquet**
**CH-1202 Genève(CH)**

(72) Inventeur: **Carugati, Daniel**
**9, rue Ernest-Hentsch**
**CH-1207 Genève(CH)**

(74) Mandataire: **Robert, Jean S.**
**51, route du Prieur**
**CH-1257 Landecy (Genève)(CH)**

(54) Procédé de conditionnement, avec pasteurisation, de produits alimentaires périssables.

(57) Le procédé consiste à cuire le produit à une température de l'ordre de 90 à 95°C, à introduire le produit sortant de cuisson directement dans son emballage, facultativement en injectant dans celui-ci de l'azote ou un mélange d'azote et de gaz carbonique à une température de l'ordre de 20°C, à sceller l'emballage et à le soumettre à un choc thermique portant le produit à une température, à coeur, de l'ordre de 2 à 6°C. Ce procédé permet l'emballage, avec pasteurisation, de tous produits alimentaires périssables, même carnés, en particulier de produits fragiles tels que les pâtes farcies.

EP 0 230 978 A1

Procédé de conditionnement, avec pasteurisation, de produits alimentaires périssables.


La présente invention a pour objet un procédé de conditionnement, avec pasteurisation, de produits alimentaires périssables.

Le conditionnement, avec pasteurisation, de produits alimentaires périssables s'obtient, actuellement, en effectuant la cuisson du produit à traiter, à une température de 95°C environ, puis un refroidissement de celui-ci à une température de 30°C environ, avant que le produit ne soit introduit dans un emballage, sachet ou barquette, par exemple. Cette dernière opération étant effectuée, on produit une dépression à l'intérieur de l'emballage, suivie du scellement de celui-ci, afin d'éviter qu'il ne se gonfle sous l'effet de la dilation de l'air qu'il contient lors de la montée en température qui est effectuée ensuite. Celle-ci consiste à porter la température du produit, à coeur, à 80°C environ, dans une étuve par exemple. Enfin, on réalise un choc thermique par refroidissement portant la température du produit, à coeur, à 2 à 6°C environ.

Ce processus est long et compliqué. De plus, la montée en température du produit emballé provoque souvent des détériorations de l'emballage, sans parler du fait qu'elle constitue une sorte de seconde cuisson, peu favorable à certains produits délicats.

Jusqu'à ce jour, on n'a pas songé à supprimer la phase qui consiste à refroidir le produit, après cuisson, avant son introduction dans l'emballage et à soumettre ensuite le produit à une montée en température. En effet, il a toujours paru que, à des températures de l'ordre de 80°C environ, les produits alimentaires ne pouvaient être introduits dans un emballage, chacun pensant que ce dernier serait détérioré par l'humidité qui se dégage des produits alimentaires sortant de cuisson.

Le mérite des inventeurs consiste à avoir surmonté ce préjugé et à avoir tenté de conditionner des produits alimentaires selon le procédé défini dans la revendication 1, ce qui, contre toute attente, s'est révélé non seulement applicable, mais conduire à des résultats tout à fait satisfaisants aussi bien en ce qui concerne l'aspect que présente l'emballage et le produit lui-même que pour ce qui est de la capacité de conservation du produit ainsi traité, de même que de ses qualités organoleptiques.

Dans la pratique, le présent procédé sera mis en oeuvre, de préférence au moyen d'une chaîne de production automatisée, de la façon suivante :

Le produit à pasteuriser et à emballer sera tout d'abord soumis à une opération de cuisson, par exemple dans l'eau bouillante, le portant, à coeur, à une température de 95°C environ. La durée de cette opération dépendra, naturellement, de la nature du produit et de sa quantité et du degré de cuisson que l'on désire obtenir.

Cette opération terminée, le produit est dosé tout en étant maintenu, par un moyen de chauffage extérieur, à une température de 80 à 85°C, pouvant descendre jusqu'à 60° selon la nature du produit. Celui-ci est ensuite introduit, à cette température, dans un emballage, sachet ou barquette.

On pourra, encore que cette opération soit facultative, injecter dans l'emballage, juste avant de le sceller, un gaz frais, à une température de l'ordre de 20°C, destiné à chasser de l'emballage l'air chaud et humide qui s'y trouve après l'introduction du produit sortant de cuisson, ce gaz devant naturellement être choisi de façon à ne pas dégrader le produit emballé ou à nuire à ses qualités organoleptiques. On utilisera de préférence de l'azote ou un mélange d'azote et de gaz carbonique, par exemple 80% d'azote et 20% de gaz carbonique, la teneur exacte du mélange étant réglée d'après le besoin en oxygène et dépendant de la nature du produit.

Le scellement de l'emballage s'effectuera alors que le produit est toujours à une température de 80 à 85°C, maintenue, si besoin, à l'aide de moyens extérieurs de chauffage.

Aussitôt le scellement effectué, le produit est soumis à un choc thermique par un abaissement rapide de sa température, qui sera poussé jusqu'à ce que le produit atteigne une température, à coeur, de 2 à 6°C environ.

Le présent procédé s'appliquera à tous produits alimentaires périssables, y compris les produits carnés, en particulier aux produits fragiles tels que pâtes farcies, du genre raviolis ou canellonis, par exemple.

Dans le cas des pâtes, en particulier, l'expérience montre que celles-ci peuvent parfaitement être cuites "al dente" et qu'elles conservent cette consistance jusqu'au moment de leur consommation.

Le présent procédé est rapide, et par conséquent économique, il conserve parfaitement les qualités organoleptiques des produits et, surtout, assure une pasteurisation largement suffisante de ceux-ci, allant au-delà de ce que la pasteurisation permet, le plus généralement, d'escompter.

Les produits pasteurisés précuits ainsi livrés au consommateur n'ont plus qu'à être réchauffés par ce dernier, de préférence directement dans la barquette qui les contient, par exemple au moyen d'un four à micro-ondes, particulièrement commode, surtout dans le cas de plats cuisinés, notamment les pâtes farcies.

REVENDICATIONS :

1. Procédé de conditionnement, avec pasteurisation, de produits alimentaires périssables, caractérisé par le fait qu'on procède à la cuisson du produit à une température supérieure ou égale à 90°C, introduit le produit, sortant de cuisson et encore chaud, dans un emballage, la température du produit étant, alors, supérieure ou égale à 60°C, puis scelle l'emballage que l'on soumet ensuite à un choc thermique, par réfrigération rapide, jusqu'à ce que le produit emballé atteigne, à coeur, une température non inférieure à 2°C.

2. Procédé suivant la revendication 1, caractérisé par le fait que la température du produit, lors de son introduction dans l'emballage, est de 80°C.

3. Procédé suivant la revendication 1, caractérisé par le fait que l'on insuffle dans l'emballage, après y avoir introduit le produit chaud, un gaz frais chassant l'air chaud et humide se trouvant dans l'emballage.

4. Procédé suivant la revendication 3, caractérisé par le fait que ledit gaz est insufflé dans l'emballage à une température de l'ordre de 20°C.

5. Procédé suivant la revendication 3, caractérisé par le fait que ledit gaz est de l'azote.

6. Procédé suivant la revendication 3, caractérisé par le fait que ledit gaz est un mélange d'azote et de gaz carbonique.

7. Procédé suivant la revendication 1, caractérisé par le fait que l'on maintient le produit à une température non inférieure à 60°C, à l'aide de moyens extérieurs de chauffage, au moins jusqu'à son introduction dans l'emballage.

8. Procédé suivant la revendication 7, caractérisé par le fait que le produit est maintenu à ladite température non inférieure à 60°C jusqu'au scellement de l'emballage, l'abaissement rapide de la température produisant le choc thermique s'effectuant aussitôt après ledit scellement.

**Office européen des brevets**

**RAPPORT DE RECHERCHE EUROPEENNE**

**0230978**

Numero de la demande

EP  87 10 0785

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | US-A-4 218 486  (W. GRACE) <br> * Colonne 2, ligne 23 - colonne 3, ligne 21; revendications * | 1,2 | B 65 B  55/14 <br> A 23 L   3/10 <br> A 23 L   1/16 <br> B 65 B  31/00 |
| Y | | 3,8 | |
| | --- | | |
| Y | DE-A-2 010 257  (W. EPPE) <br> * Page 3, lignes 8-25 * | 3 | |
| | --- | | |
| Y | GB-A-2 098 850  (J. DEMEULEMEESTER) <br> * Page 2, lignes 24-45; figure * | 8 | |
| A | | 1 | |
| | --- | | DOMAINES TECHNIQUES RECHERCHES (Int Cl 4) |
| A | FR-A-2 481 672  (MULTIVAC) <br> * Page 3, lignes 1-34 * | 5,6 | B 65 B <br> A 23 L <br> A 23 B |
| | ----- | | |

Le présent rapport de recherche a été établi pour toutes les revendications

| Lieu de la recherche <br> LA HAYE | Date d'achèvement de la recherche <br> 13-04-1987 | Examinateur <br> JAGUSIAK A.H.G. |
|---|---|---|